# EUROPEAN PATENT APPLICATION

(11) **EP 3 323 844 A1**
(43) Date of publication of application: **23.05.2018**
(21) Application number: 16199330.8
(22) Date of filing: 17.11.2016
(51) Int. Cl.: C08G 77/08, C08L 83/06

(54) **CURABLE COMPOSITIONS BASED ON SILICON-CONTAINING POLYMERS USING PHOSPHAZENES AS CATALYSTS**

(71) Applicant: Henkel AG & Co. KGaA, 40589 Düsseldorf (DE)
(72) Inventor: GUTACKER, Andrea, 40597 Düsseldorf (DE); MEJIA, Esteban, 18059 Rostock (DE); KRAGL, Udo, 18298 Kritzmow (DE); KLEIN, Johann, 40593 Düsseldorf (DE)

(57) **Abstract**

The invention relates to a curable composition comprising: a) at least one polyorganosiloxane having at least one hydroxyl group, vinyl group or hydrogen atom bound to a silicon atom, b) at least one silane of the general formula (1): Si(R¹)ₖ(Y)₄₋ₖ as defined herein, c) at least one phosphazene base of the general formula (2): R¹NP(NR²R³)ₙ(NP(NR⁴R⁵)₃)ₘ as defined herein and uses thereof.

## Description

The present invention relates to moisture-curable compositions based on silicon-containing polymers and copolymers in which the vulcanization catalyst is a phosphazene base. In addition, adhesives, sealants, or coating materials comprising these curable compositions and suitable uses of these curable compositions are described.

Silicone polymers, in particular polysiloxanes such as polydimethylsiloxane (PDMS), are of great importance in adhesives, sealants, and insulating materials. Among these materials, those which vulcanize at low temperatures and under ambient conditions constitute a considerable market share. Typical formulations contain a reactive PDMS polymer, a crosslinker, and a condensation catalyst. Although organotin compounds have been successfully used as catalysts for many years and produce excellent results with regard to storage stability, curing time, and selectivity, they have come under criticism in recent times due to toxicological concerns and for reasons of environmental protection.

Although various metal-based catalysts have been proposed as a replacement for the well-known tin compounds, the known alternatives often have disadvantages with regard to stability, catalytic activity, or compatibility. For instance, titanium compounds known as a replacement have the common disadvantage that they are not compatible with the aminosilanes frequently used as adhesion promoters.

Current research in tin-free vulcanization catalysts for silicon-containing polymers has resulted in few promising candidates (J. Cervantes, R. Zárraga, C. Salazar-Hernández, Applied Organometallic Chemistry 2012, 26, 157-163). The leading alternatives are titanates, including acetylacetonate derivatives and alcoholates, as described in EP 1746135 A1 which, although they display relatively good activities, show some drawbacks like unpleasant odor and yellowness, premature deactivation of the catalyst during preparation and storage and incompatibility with common additives like aminosiloxanes (adhesion promoters).

The main metal-free approaches are based in organic bases like imidines and guanidines, for example in WO 2007/037483 A1 and WO 2010/149869 A1. These compounds have an important drawback: after curing, the amines "bleed out" onto the surface of the material, affecting the adhesive and water-resistant properties.

Other alternative tin-free catalysts include metallic salt, for example of bismuth, molybdenum or cerium as described in US 2011/124802 A1, which also have several disadvantages like slow kinetics, low selectivity and catalysis of undesired side reactions, high melting points and poor solubility, being often used as suspensions in oil, which is technically inconvenient.

It is therefore an object of the present invention to provide tin-free condensation catalysts which overcome the known disadvantages.

The present invention achieves the object of providing improved condensation catalysts based on phosphazene bases to be used for curing polymers containing reactive silicon groups, which meet the above-described requirements, i.e., which have sufficient catalytic activity and stability and which are compatible with the aminosilanes customarily used as adhesion promoters. The herein described phosphazenes show excellent activities in the condensation reaction of various silyl-terminated polymers at room temperature. These organocatalysts are thermally and hydrolytically stable, easy to handle and metal-free. Moreover, contrary to other catalysts on the market, phosphazenes are stable towards nucleophilic additives commonly present in the formulations, like the adhesion promoters, usually aminosiloxanes. This feature not only increases the shelf life of the vulcanizable mixtures but also broadens the utilization scope of the catalysts claimed herein. These properties make these compounds a viable alternative for the replacement of titanium catalysts and the toxic tin-based systems.

In a first aspect, the invention therefore relates to a curable composition comprising
a) at least one polyorganosiloxane having at least one, preferably terminal, hydroxyl group, vinyl group or hydrogen atom bound to a silicon atom;
b) at least one silane of the general formula (1)

   Si(R¹)ₖ(Y)₄₋ₖ (1),

   wherein
   each R¹ is independently selected from an aliphatic or aromatic hydrocarbon radical containing 1 to 20 C atoms, a vinyl group or a hydrogen atom;
   each Y is independently selected from a hydroxyl group or a hydrolyzable group, preferably an oxime group, an alkoxy group, an acetoxy group or a lactate group;
   k is 0, 1, 2, or 3;
c) at least one phosphazene base of formula (2)

   R¹NP(NR²R³)n(NP(NR⁴R⁵)₃)ₘ (2),

   wherein
   m and n are integers from 0 to 3 and, where n+m = 3; and
   R¹, R², R³, R⁴, and R⁵ are, independently of one another, selected from a hydrogen atom, a C₁₋₂₀ alkyl or aryl group which may contain one or more heteroatoms, preferably oxygen atom(s), or a silicon-containing organic group, preferably -(CH₂)ₚ-Si(Alk)_{q}(OAlk)ᵣ where p is an integer from 0 to 9, q and r in each case are 0, 1, 2, or 3, where q+r = 3, and Alk is a C₁₋₄ alkyl group, preferably a methyl or ethyl group, and R² and R³ and/or R⁴ and R⁵, together with the nitrogen atom to which they are bound, can form a heterocyclic ring.

The invention is further directed to use of a composition as defined above as an adhesive, sealant, or coating material.

Yet a further aspect relates to use of the above-described phosphazene base of the general formula (2) R¹NP(NR²R³)ₙ(NP(NR⁴R⁵)₃)ₘ as catalyst, in particular for curing a silicon-containing polymer by forming siloxane bonds.

When reference is made herein to molecular weights, unless stated otherwise the reference is to the weight average molecular weight, i.e., the M_{w} value, and not the number average molecular weight. The molecular weight is determined by gel permeation chromatography (GPC) with tetrahydrofuran (THF) as eluent in accordance with DIN 55672-1:2007-08 at 35°C.

"At least one," as used herein, means 1 or more, i.e., 1, 2, 3, 4, 5, 6, 7, 8, 9, or more. With reference to an ingredient, the indication refers to the type of ingredient and not to the absolute number of molecules. "At least one polymer" thus means, for example, at least one type of polymer, i.e., that one type of polymer or a mixture of several different polymers may be used. Together with the weight indication, the indication refers to all compounds of the stated type which are contained in the composition/mixture, i.e., that the composition contains no further compounds of this type besides the stated quantity of the compounds in question.

The term "about", as used herein in connection with a numerical value, relates to a variance of ±20%, preferably ±10% of the respective value.

Unless explicitly stated otherwise, all percent values provided in conjunction with the compositions described herein refer to % by weight, in each case based on the mixture in question.

According to the preferred embodiment of the invention, the molecular weight Mₙ of the polyorganosiloxane is between 500 and 300,000 g/mol determined by GPC in accordance with DIN 55672-1:2007-08 at 35°C. The molecular weight Mₙ ranges of 5000 to 150,000 g/mol are preferred, of 5000 to 100,000 g/mol are particularly preferred, and of 8000 to 50,000 g/mol are very particularly preferred. These molecular weights are particularly advantageous, since compositions with these molecular weights have viscosities which facilitate processing. The polymers may be linear or branched in each case.

In preferred embodiments, the polyorganosiloxane is a polydiorganosiloxane, more preferably a polydimethylsiloxane, which has at least one, preferably at least two terminal hydroxyl groups. In preferred embodiments, the polyorganosilxoane is selected from α,ω-dihydroxyl-terminated polyorganosiloxanes having the following general formula: 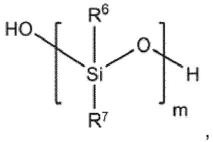 wherein R⁶ and R⁷ are same or different and are, independently of one another, selected from the group consisting of substituted, preferably with at least one halogen atom or at least one functional group selected from alkoxy, preferably methoxy, cyano, amino, hydroxyl, or thiol groups, or unsubstituted cyclic, linear or branched alkyl or alkenyl radicals having from 1 to 18 carbon atoms or aryl radicals having from 6 to 18 carbon atoms, and m is 10 to 10000.

Especially preferred polyorganosiloxanes are α,ω-dihydroxyl-terminated polydimethylsiloxanes, α,ω-dihydroxyl-terminated polydiethylsiloxanes, α,ω-dihydroxyl-terminated polydivinylsiloxanes, α,ω-dihydroxyl-terminated polydiphenylsiloxanes, α,ω-dihydroxyl-terminated polymethylethylsiloxanes, α,ω-dihydroxyl-terminated polymethylvinylsiloxanes, α,β-dihydroxyl-terminated polymethylphenylsiloxanes, α,ω-dihydroxyl-terminated polymethylchloromethylsiloxanes, α,ω-dihydroxyl-terminated polymethylchloropropylsiloxanes, α,ω-dihydroxyl-terminated polyethylvinylsiloxanes, α,ω-dihydroxyl-terminated polyethylphenylsiloxanes, α,ω-dihydroxyl-terminated polyvinylphenylsiloxanes, etc.

These polysiloxanes may have a kinematic viscosity of from 100 to 1000000 cSt at 25°C, preferably from 20000 to 100000 cSt at 25°C, more preferably from 40000 to 90000 cSt at 25°C. Mixtures comprising polydiorganosiloxanes having different viscosities may also be used.

The quantity of the polyorganosiloxanes in the composition described herein may be from 30 to 90% by weight, more preferably 35 to 80% by weight, most preferably 40 to 70% by weight, based on the total weight of the curable composition.

The silane has the general formula (1) Si(R¹)ₖ(Y)₄₋ₖ, wherein each R¹ is independently selected from an aliphatic or aromatic hydrocarbon radical, which can be substituted or unsubstituted, containing 1 to 20 C atoms, a vinyl group or a hydrogen atom; each Y is independently selected from a hydroxyl group or a hydrolyzable group, preferably an oxime group, an alkoxy group, an acetoxy group or a lactate group; and k is 0, 1, 2, or 3.

Examples of hydrolyzable groups include but are not limited to a hydrogen atom, a halogen atom, an alkoxy group, an acyloxy group, an oxime group, an acetoxy group, a lactate group, an amino group, an amide group, an acid amide group, an aminoxy group, a mercapto group, an alkenyloxy group, and the like. Alkoxy groups, in particular methoxy and ethoxy groups, and oxime groups are particularly preferred. The term "oxime groups" as used herein includes ketoximes and aldoximes, and refers in general to groups which contain the functional group R'₂C=N-O-, wherein the oxygen atom is bound to the silicon atom, and R' may be H or another group, preferably an alkyl group.

Examples of R¹ in the general formula (1) described above include but are not limited to alkyl groups, such as a methyl group and an ethyl group, cycloalkyl groups, such as a cyclohexyl group, aryl groups, such as a phenyl group, aralkyl groups, such as a benzyl group, and a trimethylsiloxy group.

According to certain embodiments of the present invention, the curable compositions are one-component compositions. In another embodiment of the present invention, the curable compositions can be two-component compositions comprising a component A comprising a) at least one polyorganosiloxane having at least one hydroxyl group, vinyl group, or hydrogen atom bound to a silicon atom, preferably hydroxyl group, and c) at least one phosphazene base of the general formula (2) as defined herein; and a component B comprising b) at least one silane of the general formula (1) as defined herein.

According to certain embodiments of the present invention, one-component or two-component curable compositions comprise a) at least one polyorganosiloxane having at least hydroxyl group, vinyl group, or hydrogen atom bound to a silicon atom and b) at least one silane of the general formula (1) as separate components.

It is likewise possible in certain embodiments according to the present invention, however, that a) at least one polyorganosiloxane having at least hydroxyl group, vinyl group, or hydrogen atom bound to a silicon atom and b) at least one silane of the general formula (1) are present in the form of a prepolymer. The prepolymer is a reaction product of the above-mentioned two components a) and b), and optionally with at least one endcapping catalyst. Suitable reactions are known and are also called endcapping. In case Y in the general formula (1) is an alkoxy or a lactate group, the reaction can be carried out in the presence of at least one endcapping catalyst, whereby the catalyst is to mediate the endcapping selectively without simultaneously curing the polyorganosiloxane. Suitable endcapping catalysts are, for example, selected from the group consisting of organic lithium compounds, for example, as described in EP 0564253 A1, amines, inorganic oxides, potassium acetate, titanium compounds such as organotitanium derivatives, titanium/amine combinations, tin compounds, carboxylic acid/amine combinations, hydrosilylation catalysts such as platinum- and/or rhodium-containing catalysts, and phosphazene bases of the general formula (2) as defined herein.

If the above-mentioned polyorganosiloxane and the silane of the general formula (1) are present in the form of a prepolymer, the curable composition may comprise the prepolymer preferably in an amount of from 32 to 97% by weight, particularly preferably in an amount of from 44 to 66% by weight, based on the total weight of the curable composition. If a mixture of a number of prepolymers is used, the quantitative data naturally refer to the total amount of prepolymers in the composition.

Specific examples of reactive silicon-containing groups of the reaction product of the at least one polyorganosiloxane, the at least one silane of the general formula (1), and the at least one optional endcapping catalyst include dimethoxymethylsilyl, diethoxymethylsilyl, and diisopropoxymethylsilyl groups.

In various embodiments, one polymer molecule in each case can contain two or more of the above-described reactive groups.

Methods for inserting reactive silicon-containing groups, preferably end groups, into polymers are well known in the prior art.

The reactive silicon-containing group may be situated on one or both ends of the main chain, within the main chain, or within or on the end of one or more side chains.

As polymer component a), the above-described polyorgarnosiloxanes may be used in each case either alone or in combinations of two or more thereof. If combinations of two or more polymers are used, the polymers that are used may differ in their monomer composition and/or their molecular weight.

The curable compositions described herein comprise at least one phosphazene base of the general formula (2)

R¹NP(NR²R³)n(NP(NR⁴R⁵)₃)ₘ (2),

wherein m and n are integers from 0 to 3, where n+m = 3; and R¹, R², R³, R⁴, and R⁵ are, independently of one another, selected from a hydrogen atom, a C₁₋₂₀ alkyl or aryl group which may contain one or more heteroatoms, preferably oxygen atom(s), or a silicon-containing organic group, preferably -(CH₂)ₚ-Si(Alk)_{q}(OAlk)ᵣ where p is an integer from 0 to 9, q and r in each case are 0, 1, 2, or 3, where q+r = 3, and Alk is a C₁₋₄ alkyl group, preferably methyl or ethyl, and R² and R³ and/or R⁴ and R⁵, together with the nitrogen atom to which they are bound, can form a heterocyclic ring.

Especially preferred are phosphazenes according to the general formula (2) where m = 0 and n = 3, commonly referred as P1 (Formula 3), m = 1 and n = 2, commonly referred as P2 (Formula 4), and m = 3 and n= 0, commonly referred as P4 (Formula 5).

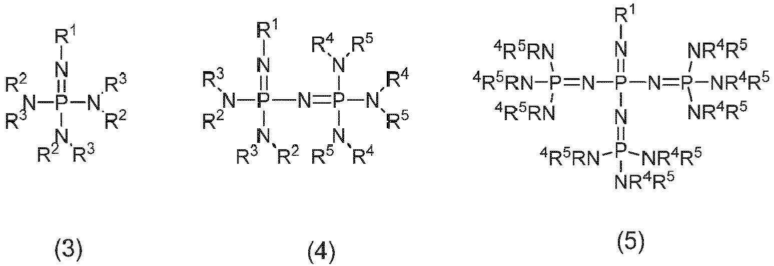

Further preferred are the prosphazene bases, such as tert-butylimino-tri(pyrrolidino)phosphorane (6), 2-tert-butylimino-2-diethylamino-1,3-dimethylperhydro-1,3,2-diazaphosphorine (7), tert-octylimino-tris(dimethylamino)phosphorane (8), 1-ethyl-2,2,4,4,4-pentakis(dimethylamino)-2λ5,4λ5-catenadi(phosphazene) (9), 1-tert-butyl-2,2,4,4,4-pentakis(dimethylamino)-2λ5,4λ5-catenadi(phosphazene) (10), and 1-tert-butyl-4,4,4-tris(dimethylamino)-2,2-bis[tris(dimethylamino)-phosphoranylidenamino]-2λ5,4λ5-catenadi(phosphazene) (11).

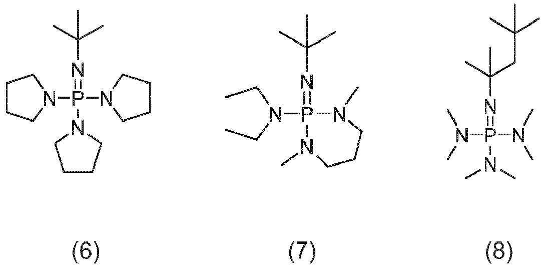

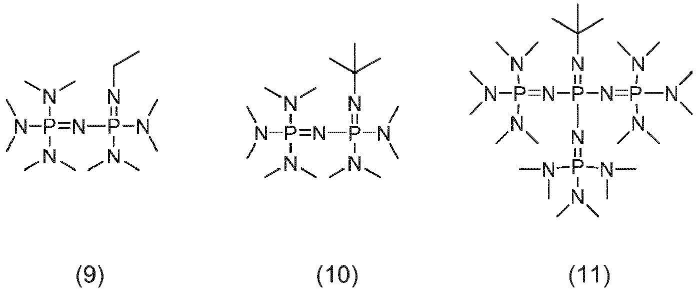

The present invention is also directed to use of the aforementioned phosphazene bases as catalysts, specifically, for curing (or vulcanization) of a silicon-containing polymer or polymer mixtures, e.g., the reaction product of the components a) and b), by forming siloxane bonds.

In preferred embodiments, the composition also contains at least one compound d) which has a hydrolyzable silicon-containing group and a weight average molecular weight in the range of 100 to 1000 g/mol measured by GPC according to DIN 55672-1:2007-08 at 35°C.

This compound d) is used as a crosslinking agent, and in addition to the hydrolyzable silicon-containing group may contain further functional groups. The compound may be a silane coupling agent.

This type of coupling agent may be used as a tackifier, as an agent which influences the physical properties, as a drying agent, as a dispersion aid, or as a filler or the like. In particular, such a silane coupling agent can act as an adhesion promoter and increase the adhesion to various surfaces, for example glass, aluminum, stainless steel, zinc, copper, mortar, PVC, acrylic resins, polyester, polyethylene, polypropylene, and polycarbonate. Such a silane coupling agent may include reactive silicon-containing groups which may be defined analogously to the groups described above in conjunction with polymer component a). Alternatively, the groups may also be those of formula (12):

-(Si(R¹)₂₋ₑ(Y)ₑ-O)ₖ-Si(R¹)_{3-d}(Y)_{d} (12),

wherein R¹ and Y are each independently defined as above for the general formula (1) and e is 0, 1, or 2 and d is 0, 1, 2, or 3, where d and e are both not 0, and k is 0 or an integer from 1 to 19, where d is not 0 when k is 0.

The compound d) may contain further functional groups, including but not limited to primary, secondary, or tertiary amino groups, mercapto groups, epoxy groups, carboxyl groups, vinyl groups, isocyanate groups, isocyanurate groups, halogens, and the like.

Specific examples of these coupling agents include but are not limited to silanes containing Isocyanate groups, such as gamma-isocyanate propyltrimethoxysilane, gamma-isocyanate propyltriethoxysilane, gamma-Isocyanate propylmethyldiethoxysilane, gamma-isocyanate propylmethyldimethoxysilane, (isocyanate methyl)trimethoxysilane, (isocyanate methyl)methyldimethoxysilane, (isocyanate methyl)triethoxysilane, and (isocyanate methyl)diethoxymethylsilane; silanes containing amino groups, such as gamma-aminopropyltrimethoxysilane, gamma-aminopropyltriethoxysilane, gamma-aminopropyltriisopropoxysilane, gamma-aminopropylmethyldimethoxysilane, gamma-aminopropylmethyldiethoxysilane, gamma-(2-aminoethyl)aminopropyltrimethoxysilane, gamma-(2-aminoethyl)aminopropylmethyldimethoxysilane, gamma-(2-aminoethyl)aminopropyltriethoxysilane, gamma-(2-aminoethyl)aminopropylmethyldiethoxysilane, gamma-(2-aminoethyl)aminopropyltriisopropoxysilane, gamma-(6-aminohexyl)aminopropyltrimethoxysilane, 3-(N-ethylamino)-2-methylpropyltrimethoxysilane, gamma-ureidopropyltrimethoxysilane, gamma-ureidopropyltriethoxysilane, *N*-phenyl-gamma-aminopropyltrimethoxysilane, *N*-benzyl-gamma-aminopropyltrimethoxysilane, *N*-vinylbenzyl-gamma-aminopropyltriethoxysilane, *N-*cyclohexylaminomethyltriethoxysilane, *N*-cyclohexylaminomethyldiethoxymethylsilane, *N-*phenylaminomethyltrimethoxysilane, (2-aminoethyl)aminomethyltrimethoxysilane, and *N,N*'-bis[3-(trimethoxysilyl)propyl]ethylenediamine; silanes of the ketimine type, such as N-(1,3-dimethylbutylidene)-3-(triethoxysilyl)-1-propanamine; silanes containing mercapto groups, such as gamma-mercaptopropyltrimethoxysilane, gamma-mercaptopropyltriethoxysilane, gamma-mercaptopropylmethyldimethoxysilane, gamma-mercaptopropylmethyldiethoxysilane, mercaptomethyltrimethoxysilane, and mercaptomethyltriethoxysilane; silanes containing epoxy groups, such as gamma-glycidoxypropyltrimethoxysilane, gamma-glycidoxypropyltriethoxysilane, gamma-glycidoxypropylmethyldimethoxysilane, beta-(3,4-epoxycyclohexyl)ethyltrimethoxysilane, and beta-(3,4-epoxycyclohexyl)ethyltriethoxysilane; carboxysilanes, such as beta-carboxyethyltriethoxysilane, beta-carboxyethylphenylbis(2-methoxyethoxy)silane, and *N-beta-*(carboxymethyl)aminoethyl-gamma-aminopropyltrimethoxysilane; silanes containing unsaturated groups of the vinyl type, such as vinyltrimethoxysilane, vinyltriethoxysilane, gamma-methacryloyloxypropylmethyldimethoxysilane, gamma-acryloyloxypropyltriethoxysilane, and methacryloyloxymethyltrimethoxysilane; silanes containing halogen, such as gamma-chloropropyltrimethoxysilane; and isocyanurate silanes, such as tris(3-trimethoxysilylpropyl)isocyanurate. In addition, partially condensed products or reaction products of the above-mentioned silanes may be used. Aminosilanes selected from the group consisting of bis(trimethylsilyl)amine, aminopropyltriethoxysilane, aminopropyltrimethoxysilane, bis[(3-triethoxysilyl)propyl]amine, bis[(3-trimethoxysilyl)propyl]amine, aminopropylmethyldiethoxysilane, aminoethylaminopropyltrimethoxysilane, aminoethylaminopropyltriethoxysilane, 3-[2-(2-aminoethylamino)ethylamino]propyltrimethoxysilane, phenylaminomethyltrimethoxysilane, aminoethylaminopropylmethyldimethoxysilane, 3-(*N*-phenylamino)propyltrimethoxysilane, 3-piperazinylpropylmethyldimethoxysilane, *3*-(*N,N-*dimethylaminopropyl)aminopropylmethyldimethoxysilane, and combinations of two or more of the above-mentioned compounds are particularly preferred within the scope of the present invention.

Examples of compounds d) which contain no additional functional groups include tetraalkoxysilanes (tetraalkylsilicates), such as tetramethoxysilane, tetraethoxysilane, ethoxytrimethoxysilane, dimethoxydiethoxysilane, methoxytriethoxysilane, tetra-n-propoxysilane, tetra-isopropoxysilane, tetra-n-butoxysilane, tetra-isobutoxysilane, and tetra-t-butoxysilane; trialkoxysilanes, such as methyltrimethoxysilane, methyltriethoxysilane, methyltriisopropoxysilane, methyltriphenoxysilane, ethyltrimethoxysilane, butyltrimethoxysilane, and phenyltrimethoxysilane; dialkoxysilanes, such as dimethyldimethoxysilane, diethyldimethoxysilane, and diphenyldimethoxysilane; monoalkoxysilanes, such as trimethylmethoxysilane and triphenylmethoxysilane; alkylisopropenoxysilanes, such as dimethyldiisopropenoxysilane and methyltriisopropenoxysilane; and the partially hydrolyzed condensates of these silanes.

According to an another preferred embodiment, the curable compositions also contain at least one compound selected from the group consisting of plasticizers, stabilizers, antioxidants, fillers, reactive diluents, drying agents, adhesion promoters, UV stabilizers, rheological aids, and/or solvents.

The phosphazene catalyst described above or mixtures of various phosphazene catalysts, i.e., phosphazene catalyst c), may be used in a quantity of 0.001 to about 10% by weight, preferably 0.001 to 5% by weight, more preferably 0.05 to 2% by weight, most preferably 0.01 to 2% by weight based on the total weight of the curable composition.

The quantity of crosslinking agent d) may be 2.5 to 7% by weight, more preferably 2.7 to 6.5 by weight, most preferably 3 to 6% by weight, based on the total weight of the curable composition.

Adhesion promoters may be used in quantities of 0 to 5% by weight, more preferably 0.2 to 4 by weight, based on the total weight of the curable composition.

The curable compositions described herein may be used as adhesives, sealants, and/or coating materials. This type of use is likewise part of the invention.

Solvents and/or plasticizers may be used for reducing the viscosity of the preparation according to the invention. Aliphatic or aromatic hydrocarbons, halogenated hydrocarbons, ketones, ethers, esters, ester alcohols, keto alcohols, keto ethers, keto esters, and ether esters are suitable as solvent.

The curable compositions according to the invention may also contain hydrophilic plasticizers. These are used for improving the moisture absorption, and thus for enhancing the reactivity at low temperatures. Suitable as plasticizers, for example, are esters of abietic acid, adipic acid esters, azelaic acid esters, benzoic acid esters, butyric acid esters, acetic acid esters, esters of higher fatty acids containing approximately 8 to approximately 44 C atoms, esters of epoxidized fatty acids, fatty acid esters and fats, glycolic acid esters, phosphoric acid esters, phthalic acid esters, esters of linear or branched alcohols containing from 1 to 12 C atoms, propionic acid esters, sebacic acid esters, sulfonic acid esters, thiobutyric acid esters, trimellitic acid esters, citric acid esters, and esters based on nitrocellulose and polyvinyl acetate, and mixtures of two or more thereof.

Suitable among the phthalic acid esters, for example, are dioctyl phthalate, dibutyl phthalate, diisoundecyl phthalate, or butylbenzyl phthalate, and among the adipates are dioctyl adipate, diisodecyl adipate, diisodecyl succinate, dibutyl sebacate, or butyl oleate.

The curable compositions according to the invention may also contain up to about 20% by weight of customary adhesion promoters (tackifiers). Suitable as adhesion promoters, for example, are resins, terpene oligomers, coumarone/indene resins, aliphatic petrochemical resins, and modified phenolic resins. Suitable within the scope of the present invention, for example, are hydrocarbon resins which are obtained by polymerization of terpenes, primarily α- or β-pinene, dipentene, or limonene. The polymerization of these monomers generally takes place cationically with initiation with Friedel-Crafts catalysts. The terpene resins also include, for example, copolymers of terpenes and other monomers, for example styrene, α-methylstyrene, isoprene, and the like. The stated resins are used, for example, as adhesion promoters for contact adhesives and coating materials. Likewise suited are terpene phenolic resins, which are produced by acid-catalyzed addition of phenols to terpenes or colophony. Terpene phenolic resins are soluble in most organic solvents and oils and miscible with other resins, waxes, and rubber. Likewise suitable as additives within the scope of the present invention are colophony resins and derivatives thereof, for example esters thereof.

Furthermore, the curable compositions according to the invention may additionally contain up to about 7% by weight, in particular up to about 5% by weight, of antioxidants.

The curable compositions according to the invention may contain up to about 2% by weight, preferably about 1% by weight, of UV stabilizers. The so-called hindered amine light stabilizers (HALS) are particularly suitable as UV stabilizers. Within the scope of the present invention, it is preferred to use a UV stabilizer which bears a silyl group and which is incorporated into the end product during crosslinking and curing. The products Lowilite 75 and Lowilite 77 (Great Lakes, US) are particularly suited for this purpose. In addition, benzotriazoles, benzophenones, benzoates, cyanoacrylates, acrylates, sterically hindered phenols, phosphorus, and/or sulfur may also be added.

It is often expedient to further stabilize the curable compositions according to the invention against penetrating moisture by use of drying agents in order to further extend the shelf life.

Such an improvement in the shelf life may be achieved, for example, by the use of drying agents. All compounds which react with water to form a group that is inert with respect to the reactive groups present in the composition, and which in the process preferably experience little change in their molecular weight, are suitable as drying agent. Furthermore, the reactivity of the drying agents with respect to moisture that has penetrated into the composition must be higher than the reactivity of the groups of the silyl group-bearing polymer according to the invention present in the composition.

Isocyanates, for example, are suitable as drying agent.

Silanes are advantageously used as drying agent. Examples are vinylsilanes such as 3-vinylpropyltriethoxysilane, oxime silanes such as methyl-*O,O',O*'-butan-2-one-trioximosilane or *O*,*O'*,*O''*,*O'*"=butan-2-one-tetraoximosilane (CAS Nos. 022984-54-9 and 034206-40-1), or benzamidosilanes such as bis(*N*-methylbenzamido)methylethoxysilane (CAS No. 16230-35-6) or carbamatosilanes such as carbamatomethyltrimethoxysilane. However, the use of methyl-, ethyl-, or vinyltrimethoxysilane or tetramethyl- or tetraethylethoxysilane is also possible. With regard to efficiency and cost, vinyltrimethoxysilane and tetraethoxysilane are particularly preferred here.

Likewise suitable as drying agent are the above-mentioned reactive diluents, provided that they have a molecular weight (Mₙ) of less than about 5,000 g/mol and have end groups whose reactivity with respect to penetrated moisture is at least as high as, preferably higher than, the reactivity of the reactive groups of the silyl group-bearing polymer according to the invention.

Lastly, alkyl orthoformates or orthoacetates, for example methyl or ethyl orthoformate, methyl or ethyl orthoacetate, may also be used as drying agent,

The adhesives and sealants according to the invention generally contain about 0 to about 6% by weight of drying agent.

The curable compositions according to the invention may additionally contain fillers. Suitable examples here are chalk, lime powder, precipitated and/or pyrogenic silicic acid, zeolites, bentonites, magnesium carbonate, diatomaceous earth, alumina, clay, talc, titanium oxide, iron oxide, zinc oxide, sand, quartz, flint, mica, glass powder, and other ground mineral substances. In addition, organic fillers may also be used, in particular carbon black, graphite, wood fiber, wood flour, sawdust, cellulose, cotton, pulp, wood chips, chopped straw, and chaff. Moreover, short fibers such as glass fiber, glass filament, polyacrylonitrile, carbon fiber, Kevlar fiber, or also polyethylene fiber may be added. Powdered aluminum is likewise suitable as filler.

The pyrogenic and/or precipitated silicic acids advantageously have a BET surface area of 10 to 90 m²/g. During use, they do not cause an additional increase in the viscosity of the composition according to the invention, but contribute to strengthening of the cured composition.

It is likewise conceivable to use pyrogenic and/or precipitated silicic acids having a larger BET surface area, advantageously 100-250 m²/g, in particular 110-170 m²/g, as filler. Due to the larger BET surface area, the same effect, for example strengthening the cured composition, may be obtained at a lower weight fraction. Further substances may thus be used to improve the composition according to the invention with regard to other requirements.

Furthermore, hollow spheres having a mineral shell or a plastic shell are suitable as filler. These may be, for example, hollow glass spheres which are commercially available under the trade name Glass Bubbles^{®}. Hollow spheres based on plastic, for example Expancel^{®} or Dualite^{®}, are described in EP 0 520 426 B1, for example. These are composed of inorganic or organic substances, each having a diameter of 1 mm or less, preferably 500 µm or less.

For some applications, fillers are preferred which impart thixotropy to the compositions. Such fillers are also described as rheological aids, for example hydrogenated castor oil, fatty acid amides, or swellable plastics such as PVC. To allow them to be easily pressed out of a suitable dosing device (a tube, for example), such compositions have a viscosity of 3000 to 15,000 mPas, preferably 40,000 to 80,000 mPas, or also 50,000 to 60,000 mPas.

The fillers are preferably used in a quantity of 1 to 80% by weight, based on the total weight of the curable composition.

The curable composition according to the invention is produced according to known methods by intimately mixing the components in suitable dispersion units, for example a high-speed mixer.

A further subject matter of the present invention relates to use of the composition according to the invention as an adhesive, sealant, or filling compound, and for producing molded parts. A further field of application of the compositions according to the inventions is use as plugging, hole-filling, or spackling compound.

The compositions according to the invention are thus suitable for adhesively bonding plastics, metals, glass, ceramic, wood, wood-based materials, paper, paper-based materials, rubber, and textiles, for gluing floors, sealing building elements, windows, wall and floor coverings, and jointing in general. In this regard, the materials in each case may be adhesively bonded to themselves or with any other of the stated materials.

Lastly, the invention further relates to the use of phosphazene bases as catalyst, in particular as condensation catalyst, for curing a silicon-containing polyorganosiloxane. During this curing, the reactive silicon-containing groups are crosslinked to form siloxane bonds.

The following examples are used to explain the invention; however, the invention is not limited thereto.

### Examples

### Example 1:

The phosphazene base tert-butylimino-tri(pyrrolidino)phosphorane (Formula (6)) was tested in the crosslinking reaction of an alkoxy silicone mixture as described in Table 1.

**Table 1: Formulation 1 (alkoxy silicone)**

| **Raw materials** | **weight %** |
|---|---|
| α,ω-dimethoxyvinyl-terminated polydimethylsiloxane with viscosity of 50000 cST (detailed procedure: see US2003/0216536) | 46.1 |
| chalk, potassium carbonate | 45.2 |
| Silica (Aerosil R974) | 4.4 |
| Aminopropyltriethoxysilane (Adhesion promoter) | 0.5 |
| Moisture catalyst | 1.4 |
| Moisture scavenger | 2.1 |
| Catalyst (Formula (6)) | 0.3 |

### Example 2:

The phosphazene base tert-butylimino-tri(pyrrolidino)phosphorane (Formula (6)) was tested in the crosslinking reaction of an oxime silicone mixture as described in Table 2.

**Table 2: Formulation 2 (oxime silicone)**

| **Raw materials** | **weight %** |
|---|---|
| α,ω-dihydroxyl-terminated polydimethylsiloxane with viscosity of 80000 cST | 59.73 |
| Mineral oil (G3H) | 25.07 |
| Methyltris(methylisobutylketoxime)silane | 1.72 |
| Methyltris(methylethylketoxime)silane | 2.06 |
| Vinyltris(methylethylketoxime)silane | 0.49 |
| Sllica (Aerosil 150) | 10.03 |
| Amino silanes mixture | 0.86 |
| Catalyst (Formula (6)) | 0.05 |

### Example 3:

The phosphazene base tert-butylimino-tri(pyrrolidino)phosphorane (Formula (6)) was tested in the crosslinking reaction of an acetoxy silicone mixture as described in Table 3.

**Table 3: Formulation 3 (acetoxy silicone)**

| **Raw materials** | **weight %** |
|---|---|
| α,ω-dihydroxyl-terminated polydimethylsiloxane with viscosity of 80000 cST | 62.58 |
| Mineral oil (G3H) | 25.06 |
| Ethyltriacetoxysilane | 3.65 |
| Sllica (Aerosil 150) | 8.69 |
| Catalyst (Formula (6)) | 0.02 |

### Example 4:

The phosphazene base tert-butylimino-tri(pyrrolidino)phosphorane (Formula (6)) was tested in the crosslinking reaction of a lactic acid ester silicone mixture as described in Table 4.

**Table 4: Formulation 4 (lactic acid ester silicone)**

| **Raw materials** | **weight %** |
|---|---|
| α,ω-dihydroxyl-terminated polydimethylsiloxane with viscosity of 80000 cST | 59.1 |
| α,ω-dimethyl-terminated polydimethylsiloxane with viscosity of 1000 cST | 26.4 |
| Vinyltriethyllactatosilane | 5.0 |
| Silica (Aerosil R104) | 7.3 |
| Amino silanes mixture | 1.2 |
| Catalyst (Formula (6)) | 1.0 |

### Comparative Example 1:

Tetra-n-butyltitanate (TnBT) was tested as catalyst in the crosslinking reaction of an alkoxy silicone mixture as described in Table 1.

### Comparative Example 2:

Tetra-n-butyltitanate (TnBT) was tested as catalyst in the crosslinking reaction of an oxime silicone mixture as described in Table 2.

### Comparative Example 3:

Dibutyltinacetate (DBTA) was tested as catalyst in the crosslinking reaction of an oxime silicone mixture as described in Table 2.

### Comparative Example 4:

Tetra-n-butyltitanate (TnBT) was tested as catalyst in the crosslinking reaction of an acetoxy silicone mixture as described in Table 3.

### Comparative Example 5:

Dioctyltin dilaurate (DOTL) was tested as catalyst in the crosslinking reaction of a lactic acid ester silicone mixture as described in Table 4.

### Curing performance tests

### Determination of Skin-over time (SOT):

Skin-over time (SOT) is defined as the time required for the material to form a non-tacky surface film. The determination of the skin over time is carried out according to DIN 50014 under standard climate conditions (23 +/- 2°C, relative humidity 50 +/- 5%). The temperature of the sealant must be 23 +/- 2°C, with the sealant stored for at least 24 h beforehand in the laboratory. The sealant is applied to a sheet of paper and spread out with a putty knife to form a skin (thickness about 2 mm, width about 7 cm). The stopwatch is started immediately. At intervals, the surface is touched lightly with the fingertip and the finger is pulled away, with sufficient pressure on the surface that an impression remains on the surface when the skin formation time is reached. The skin-over time is reached when sealing compound no longer adheres to the fingertip. The skin-over time (SOT) is expressed in minutes.

### Measurement of Shore A hardness:

Shore A hardness was measured according to ISO 868.

### Determination of the depth of cure (DOC):

A strip of the material with a height of 10 mm (+/- 1 mm) and width of 20 mm (+/- 2 mm) was applied over a plastic foil (PP) using a Teflon spatula. After storing the sample for 24 hours at normal conditions (23 +/- 2 °C, relative humidity 50 +/- 5 %), a section of the strip was cut off and the thickness of the cured layer was measured with a caliper. The depth of cure after 24 hour is expressed in millimeters.

### Assessment of the mechanical properties (tensile test):

The Tensile test determines the breaking force, elongation at break and yield stress value (e-module), according to DIN 53504.

Deviation from the norm: dumbbell specimens with the following dimensions were used: thickness 2 +/- 0.2 mm; bar width 10 +/- 0.5 mm; bar length approx. 45 mm; total length 9 cm. The tests took place at normal conditions (23 +/- 2 °C, relative humidity 50 +/- 5 %). The measurement was carried out after 7 days of curing.

Procedure: the prepolymer mixture (formulation) was spread on an even surface forming a film with a thickness of 2 mm. The film was allowed to cure under normal conditions (see above) for seven days, and then the dumbbell specimen was punched out. Three specimens were used for each determination. The test was carried out under normal conditions. The test specimens have to be at the same temperature at which the measurement will take place. Before the measurement, the thickness of the test specimens is determined at least at three different positions, at the middle and at the extremes, with a caliper. The mean value is introduced in the measuring software. The test specimens are clamped into the tensile tester so that the longitudinal axis coincides with the mechanical axis of the tensile tester and comprises the largest possible surface of the rod heads, without clamping the middle bar. Then the dumbbell is stretched to <0.1 MPa with a rate of 50 mm / min.. Then, the force-elongation curve is recorded with a line speed of 50 mm / min.

Evaluation: The following values are determined: breaking force in [N / mm²] elongation at break in [%] and modulus at 100% elongation in [N / mm²].

The results of the measurements of the Examples 1 to 4 (Ex 1 to 4) and Comparative Examples 1 to 5 (C1 to C5) are presented in Table 5.

**Table 5: Results**

| Example | Ex 1 | C1 | Ex 2 | C2 | C3 | Ex 3 | C4 | Ex 4 | C5 |
|---|---|---|---|---|---|---|---|---|---|
| Catalyst | (6) | TnBT | (6) | TnBT | DBTA | (6) | TnBT | (6) | DOTL |
| Amount (Wt %) | 0.3 | 0.17 | 0.05 | 0.05 | 0.17 | 0.02 | 0.02 | 1.0 | 0.2 |
| SOT (min) | 13 | 20 | 6 | 23 | 17 | 10 | 8 | 7 | 18 |
| Shore A - 1 day | 13 | 6 | 10 | 10 | 14 | 7 | 17 | 7 | 22 |
| Shore A - 7 days | 45 | 20 | 15 | 18 | 17 | 10 | 17 | 11 | 30 |
| DOC - 24 h (mm) | 2.6 | 2.11 | 3.92 | 2.8 | 3.11 | 3.77 | 2.12 | 3.26 | 3.59 |
| Module at 100% | 0.76 | 0.36 | 0.33 | 0.32 | 0.24 | 0.20 | 0.34 | 0.19 | 0.34 |
| Tensile strength at break (N/mm²) | 1.82 | 0.34 | 1.13 | 0.76 | 0.79 | 0.69 | 1.00 | 0.90 | 0.95 |
| Elongation at break (%) | 601 | 127 | 568 | 315 | 514 | 681 | 351 | 717 | 488 |

## Claims

1. Curable composition comprising
a) at least one polyorganosiloxane having at least one hydroxyl group, vinyl group or hydrogen atom bound to a silicon atom;
b) at least one silane of the general formula (1)
Si(R¹)ₖ(Y)₄₋ₖ (1),
wherein
each R¹ is independently selected from an aliphatic or aromatic hydrocarbon radical containing 1 to 20 C atoms, a vinyl group or a hydrogen atom;
each Y is independently selected from a hydroxyl group or a hydrolyzable group;
k is 0, 1, 2, or 3;
c) at least one phosphazene base of the general formula (2)
R¹NP(NR²R³)n(NP(NR⁴R⁵)₃)ₘ (2),
wherein
m and n are integers from 0 to 3 and, where n+m = 3; and
R¹, R², R³, R⁴, and R⁵ are, independently of one another, selected from a hydrogen atom, a C₁₋₂₀ alkyl or aryl group which may contain one or more heteroatoms, or a silicon-containing organic group, preferably -(CH₂)ₚ-Si(Alk)_{q}(OAlk)ᵣ where p is an integer from 0 to 9, q and r in each case are 0, 1, 2, or 3, where q+r = 3, and Alk is a C₁₋₄ alkyl group, and R² and R³ and/or R⁴ and R⁵, together with the nitrogen atom to which they are bound, can form a heterocyclic ring.

2. The curable composition according to claim 1, wherein the at least one polyorganosiloxane and the at least one silane of the general formula (1) are present in the composition as separate components or in the form of a prepolymer, wherein the prepolymer is a reaction product of the at least one of the polyorganosiloxane and the at least one silane of the general formula (1).

3. The curable composition according to claim 1 or 2, wherein at least one endcapping catalyst is used in the reaction of the at least one polyorganosiloxane and the at least one silane of the general formula (1).

4. The curable composition according to at least one of the preceding claims, wherein the at least one phosphazene base is selected from Formula (3) where m = 0 and n = 3, Formula (4) where m = 1 and n = 2, or Formula (5) where m = 3 and n = 0

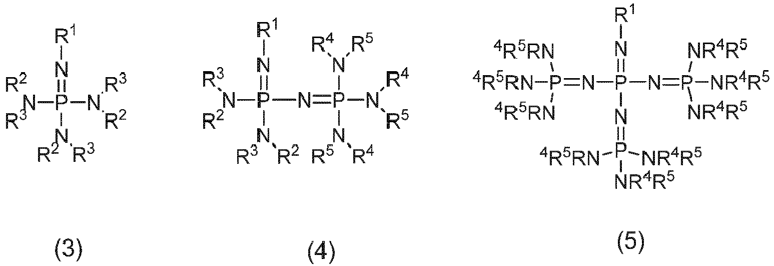

5. The curable composition according to at least one of the preceding claims, wherein the polyorganosiloxane is a polydiorganosiloxane, preferably a polydimethylsiloxane, which has at least one terminal hydroxyl groups.

6. The curable composition according to claim 5, wherein the polydiorganosiloxane has at least two terminal hydroxyl groups.

7. The curable composition according to claim 6, wherein the polyorganosiloxane having at least two terminal hydroxyl groups is an α,ω-dihydroxyl-terminated polydiorganosiloxane, particularly an α,ω-dihydroxyl-terminated polydimethylsiloxane.

8. The curable composition according to at least one of the preceding claims, wherein the composition further comprises d) at least one compound which has a hydrolyzable silicon-containing group and a weight average molecular weight in the range of 100 to 1,000 g/mol.

9. The curable composition according to claim 8, wherein the composition as compound d) comprises an aminosilane, preferably selected from the group consisting of bis(trimethylsilyl)amine, aminopropyltriethoxysilane, aminopropyltrimethoxysilane, bis[(3-triethoxysilyl)propyl]amine, bis[(3-trimethoxysilyl)propyl]amine, aminopropylmethyldiethoxysilane, aminoethylaminopropyltrimethoxysilane, aminoethylaminopropyltriethoxysilane, 3-[2-(2-aminoethylamino)ethylamino]propyltrimethoxysilane, phenylaminomethyltrimethoxysilane, aminoethylaminopropylmethyldimethoxysilane, 3-(*N*-phenylamino)propyltrimethoxysilane, 3-piperazinylpropylmethyldimethoxysilane, and 3-(*N,N-*dimethylaminopropyl)aminopropylmethyldimethoxysilane, or combinations of two or more of the above-mentioned compounds.

10. The curable composition according to at least one of the preceding claims, wherein the composition additionally contains at least one compound selected from the group consisting of plasticizers, stabilizers, antioxidants, fillers, reactive diluents, drying agents, adhesion promoters, UV stabilizers, rheological agents, solvents, and mixtures thereof.

11. An adhesive, sealant, or coating material comprising a curable composition according to at least one of the preceding claims.

12. Use of a curable composition according to at least one of claims 1 to 10 as adhesive, sealant, or coating material.

13. Use of phosphazene base of the general formula (2)
R¹NP(NR²R³)n(NP(NR⁴R⁵)₃)ₘ (2)
as catalyst, preferably for curing a silicon-containing polymer by forming siloxane bonds, wherein m and n are integers from 0 to 3 and, where n+m = 3; and
R¹, R², R³, R⁴, and R⁵ are, independently of one another, selected from a hydrogen atom, a C₁₋₂₀ alkyl or aryl group which may contain one or more heteroatoms, or a silicon-containing organic group, preferably -(CH₂)ₚ-Si(Alk)_{q}(OAlk)ᵣ where p is an integer from 0 to 9, q and r in each case are 0, 1, 2, or 3, where q+r = 3, and Alk is a C₁₋₄ alkyl group, and R² and R³ and/or R⁴ and R⁵, together with the nitrogen atom to which they are bound, can form a heterocyclic ring.
